# EUROPEAN PATENT SPECIFICATION

(11) **EP 2 612 728 B1**
(45) Date of publication and mention of the grant of the patent: **11.04.2018**
(21) Application number: 13150116.5
(22) Date of filing: 03.01.2013
(51) Int. Cl.: B24B 53/00, B24D 3/00, B24D 5/12, B23H 9/00

(54) **Method of manufacturing an outer blade cutting wheel**
Verfahren zum Herstellen eines Außenklingenschneidrades
Méthode de fabrication d'une roue de coupe d'une lame externe

(30) Priority: 06.01.2012 JP 2012001250
(43) Date of publication of application: 10.07.2013
(73) Proprietor: Shin-Etsu Chemical Co., Ltd., Chiyoda-ku, Tokyo (JP)
(72) Inventor: Maegawa, Harukazu, Echizen-shi, Fukui (JP); Yamaguchi, Takaharu, Echizen-shi,, Fukui (JP); Shimao, Masanobu, Echizen-shi, Fukui (JP)
(74) Representative: Stoner, Gerard Patrick

(56) References cited:
- EP-A1- 1 930 477
- JP-A- H07 207 254
- JP-A- H09 131 725
- JP-A- 2006 015 468
- US-A1- 2010 275 522

## Description

### TECHNICAL FIELD

This invention relates to a method of manufacturing an outer blade cutting wheel comprising a base in the form of an annular thin disc of cemented carbide and a blade section formed on the outer periphery of the base, the blade section being an abrasive layer comprising abrasive grains and a metal or alloy bond for bonding the grains to each other and to the base.

### BACKGROUND

For cutting of rare earth permanent magnets (sintered magnets), the sawing method using outer-diameter blade cutting wheels is well known. By virtue of many advantages including an inexpensive cutting wheel, an acceptable cutting allowance on use of hard-metal blades, a high dimensional accuracy of workpieces, a relatively high machining speed, and a mass scale of manufacture, the outer blade cutting-off technique is widely employed in cutting of rare earth sintered magnets.

Patent Documents 1 to 3 disclose outer blade cutting wheels for use in cutting of rare earth permanent magnets. The known cutting wheel comprises a cemented carbide base and a blade section having diamond or CBN abrasive grains bonded to the outer periphery of the base by metal or alloy plating, typically nickel plating.

The outer blade cutting wheel is typically manufactured by providing a base in the form of an annular thin disc of cemented carbide, distributing diamond or CBN abrasive grains on the outer periphery of the base, and electroplating or electroless plating a metal or alloy to deposit a metal or alloy bond for bonding abrasive grains together or to the base to form an abrasive layer composed of abrasive grains and the metal or alloy bond. The abrasive layer constitutes a blade section. After the blade section is formed, the abrasive layer constituting the blade section is shaped and dressed to expose abrasive grains at the exterior. As the cutting edge wears in use, one or more further dressing treatments, like that at the end of preparation, are taken at appropriate time interval(s) in order to restore the cutting edge.

The dressing treatment may be generally carried out by wire electrical discharge machining (EDM), or by using a dresser in the form of a grinding wheel of diamond, CBN, SiC or alumina grains, and grinding the surface of the abrasive layer to remove clogging chips or scrape the bonding material for thereby exposing new abrasive grains.

Whether or not the dressing treatment is satisfactory largely affects the cutting performance after preparation or after restoration, for example, leaving cutting marks on the cut surface or causing a difference in cutting accuracy. It is desired to have a method for dressing an outer blade cutting wheel which is capable of sufficient dressing to ensure that chips received in chip pockets in the blade section are shed and part of the bonding material is removed to expose new abrasive grains, for thereby improving the performance of the outer blade cutting wheel. US 2010/275522 A1 discloses a method of manufacturing an outer blade cutting wheel comprising a base in the form of an annular thin disc of cemented carbide having an outer periphery and a blade section formed on the outer periphery of the base, the blade section being an abrasive layer comprising abrasive grains and a metal or alloy bonding the grains to each other and to the base, the method comprising the following steps:
clamping the outer blade cutting wheel between a pair of circular jigs to hold the cutting wheel such that the jigs cover the opposed surfaces of the cutting wheel over a predetermined range,
filling abrasive grains into the space and holding the abrasive grains in the space by the attraction of permanent magnets attached to the jigs, and

### THE INVENTION

The invention pertains to an outer blade cutting wheel comprising a base in the form of an annular disc of cemented carbide and a blade section formed on an outer periphery of the base, the blade section being an abrasive layer comprising abrasive grains and a metal or alloy bond for bonding the grains to each other and to the base. The object of the invention is to provide a method of manufacturing the outer blade cutting wheel according to claim 1.

In conjunction with an outer blade cutting wheel comprising a base in the form of an annular thin disc of cemented carbide and a blade section formed on an outer periphery of the base, the blade section being an abrasive layer comprising abrasive grains and a metal or alloy bond for bonding the grains to each other and to the base, the inventors have found that in dressing of the blade section of the outer blade cutting wheel, if part of the bond and chips received in chip pockets are dissolved away or removed by electropolishing, then abrasive grains are effectively exposed and chip pockets are formed, achieving satisfactory truing.

Continuing further investigations on the efficient dressing of the blade section by electropolishing, the inventors have found that very efficient and consistent electropolishing is ensured by clamping the outer blade cutting wheel between a pair of circular jigs to hold the cutting wheel such that the opposed surfaces of the cutting wheel are covered over a predetermined range with the jigs and the blade section projects beyond the outer edge of the circular jigs, immersing the cutting wheel clamped between the jigs in an electropolishing liquid in an electropolishing tank, providing an electrode which is spaced apart from and encloses the outer circumference of the blade section and a pair of electrodes which are opposed to and spaced apart from the side surfaces of the blade section, as counter electrodes, and conducting electricity to the cutting wheel via the circular jigs and the counter electrodes. That is, efficient and satisfactory dressing operation is possible. It has also been found that in case electroplating or electroless plating is effected on the base having abrasive grains retained on its outer periphery in a plating bath, to deposit a metal or alloy bond for forming the blade section, the plating bath in the electroplating or electroless plating step may be used as the electropolishing liquid after the blade section is shaped or tailored by wire electrical discharge machining (EDM) and/or a grinding wheel.

In a preferred embodiment, the counter electrodes include a cage electrode which is spaced apart from and encloses the outer circumference of the blade section and a pair of annular electrodes which are opposed to and spaced apart from the side surfaces of the blade section.

Preferably the abrasive grains in the blade section are diamond and/or CBN grains. Also preferably the metal or alloy bonding the grains to each other and to the base is formed by electroplating or electroless plating. In preferred embodiments the bonding metal is selected from Ni and Cu, and the bonding alloy is selected from Ni-Fe, Ni-Mn, Ni-P, Ni-Co and Ni-Sn alloys.

The blade section optionally further comprises a metal or alloy infiltrated into voids between abrasive grains or between abrasive grains and the base. More preferably, the infiltrating metal is Sn and/or Pb, and the infiltrating alloy is selected from Sn-Ag-Cu, Sn-Ag, Sn-Cu, Sn-Zn and Sn-Pb alloys and mixtures thereof. The invention provides a method for manufacturing an outer blade cutting wheel according to claim 1, the wheel comprising a base in the form of an annular thin disc of cemented carbide having an outer periphery and a blade section formed on the outer periphery of the base, the method comprising the steps of:
effecting electroplating on the base having abrasive grains retained on its outer periphery in a plating bath, to deposit a metal or alloy for bonding the abrasive grains to each other and to the base, for thereby forming an abrasive layer composed of the abrasive grains and the metal or alloy, the abrasive layer constituting the blade section,
tailoring the protrusion, thickness and outer diameter of the abrasive layer by wire electrical discharge machining and/or a grinding wheel, and
dressing the cutting wheel by a dressing method as defined above, preferably using the plating bath of the electroplating step as an electropolishing liquid in the dressing method, thereby electrolytically dissolving away part of the metal or alloy between abrasive grains and chips received in chip pockets in the blade section surface until abrasive grains are partially raised from the blade section surface.

In a preferred embodiment, the abrasive grains are diamond and/or CBN grains.

In a preferred embodiment, the bonding metal is selected from Ni and Cu, and the bonding alloy is selected from Ni-Fe, Ni-Mn, Ni-P, Ni-Co and Ni-Sn alloys.

The manufacturing method may comprise, after the step of electroplating to form an abrasive layer composed of abrasive grains and the metal or alloy, the step of effecting further electroplating or electroless plating to form a plating cover for enhancing the bond strength between abrasive grains and between abrasive grains and the base; or the step of infiltrating a molten metal and/or alloy into voids between abrasive grains or between abrasive grains and the base and solidifying the metal and/or alloy therein. Preferably the infiltrating metal is Sn and/or Pb, and the infiltrating alloy is selected from Sn-Ag-Cu, Sn-Ag, Sn-Cu, Sn-Zn and Sn-Pb alloys and mixtures thereof.

### ADVANTAGEOUS EFFECTS

The inventive method for dressing an outer blade cutting wheel comprising a cemented carbide base and a blade section composed of abrasive grains and a metal or alloy bond on the outer periphery of the base ensures efficient and satisfactory dressing of the blade section. A high-performance outer blade cutting wheel can be manufactured in an efficient and consistent manner.

### BRIEF DESCRIPTION OF THE DRAWINGS

FIG. 1 schematically illustrates exemplary circular jigs used in the dressing method of the invention.
FIG. 2 schematically illustrates an outer blade cutting wheel held between the jigs, FIG. 2A showing an overall assembly, FIG. 2B showing an outer periphery portion in one situation, and FIG. 2C showing an outer periphery portion in another situation.
FIG. 3 is a schematic perspective view of an electropolishing or plating tank used in the dressing or manufacturing method.
FIG. 4 is a schematic perspective view of one exemplary cage electrode used as the counter electrode (during electropolishing) or anode (during plating) in the dressing or manufacturing method.
FIG. 5 is a schematic perspective view of a pair of annular electrodes used as the counter electrode in the dressing method.
FIG. 6 is a schematic enlarged view showing the blade section of the cutting wheel relative to the counter electrodes in the dressing method.
FIG. 7 is a micrograph under optical stereomicroscope, showing the side surface of a blade section of an outer blade cutting wheel in Example 1.
FIG. 8 is a micrograph under optical stereomicroscope, showing the side surface of a blade section of an outer blade cutting wheel in Comparative Example 1.
FIG. 9 is a micrograph showing the surface of a rare earth permanent magnet piece cut by the outer blade cutting wheel, FIG. 9A and 9B corresponding to Examples 1 and 2, respectively.
FIG. 10 is a micrograph showing the surface of a rare earth permanent magnet piece cut by the outer blade cutting wheel, FIG. 10A and 10B corresponding to Comparative Examples 1 and 2, respectively.
FIG. 11 is a graph comparing the dimensional accuracy of rare earth permanent magnet pieces cut by the outer blade cutting wheels of Examples 1, 2 and Comparative Examples 1, 2.

### FURTHER EXPLANATIONS; OPTIONS AND PREFERENCES

It is noted that since the disc has a center and an outer circumference, the terms "radial" and "axial" are used relative to the center of the disc. And so, the thickness is an axial dimension, and the height is a radial dimension. Likewise the term "outer" or the like is used relative to the center of the disc.

As used herein, the term "electropolishing" refers to electrolytic polishing, which is known technology.

The invention pertains to an outer blade cutting wheel comprising a base in the form of an annular thin disc of cemented carbide and a blade section formed on the outer periphery of the base, the blade section being an abrasive layer comprising abrasive grains and a metal or alloy for bonding the grains to each other and to the base. The invention comprises a step of dressing the blade section of the outer blade cutting wheel by electropolishing. The outer blade cutting wheel is held by clamping it between a pair of circular jigs and immersed in an electropolishing liquid in an electropolishing tank, where electropolishing is carried out.

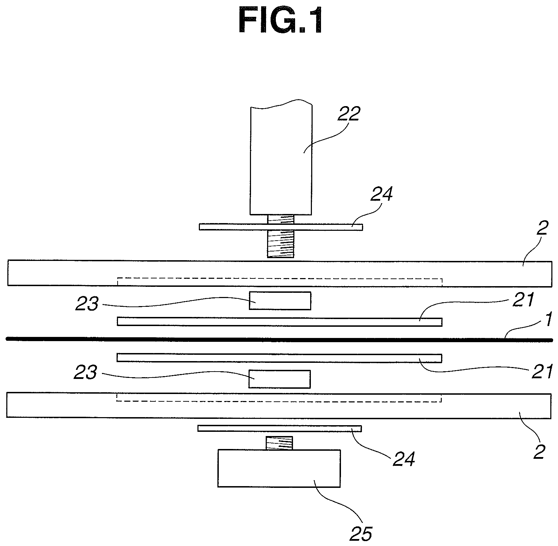

The outer blade cutting wheel is held by clamping the cutting wheel between a pair of circular jigs such that the opposed surfaces of the cutting wheel are covered over a predetermined range with the jigs and the blade section projects beyond the outer edge of the circular jigs. FIG. 1 shows a pair of circular jigs 2, 2 for clamping an outer blade cutting wheel 1 therebetween.

In FIG. 1, circular jigs 2, 2 are shown as discs having a screw insertion bore (not shown) at the center. The circular jigs 2 are made of a dielectric material, e.g. engineering plastics or ceramics such as alumina, and have an outer diameter smaller than the outer diameter of the cutting wheel 1 to be dressed. Retainer/electrode plates 21, 21 are mounted in central recesses of the circular jigs 2, 2. The electrode plates 21, 21 are in electrical contact with a conductive support or rod 22 via power feed pieces 23, 23 so that electricity may be conducted from the support 22 to the electrode plates 21, 21. It is noted that the portions of these electricity conducting members which come in contact with the electropolishing liquid in the electropolishing tank are coated with a dielectric material such as silicone. A washer 24 is interposed between the upper jig 2 and the support 22, and another washer 24 is interposed between the lower jig 2 and an end block 25.

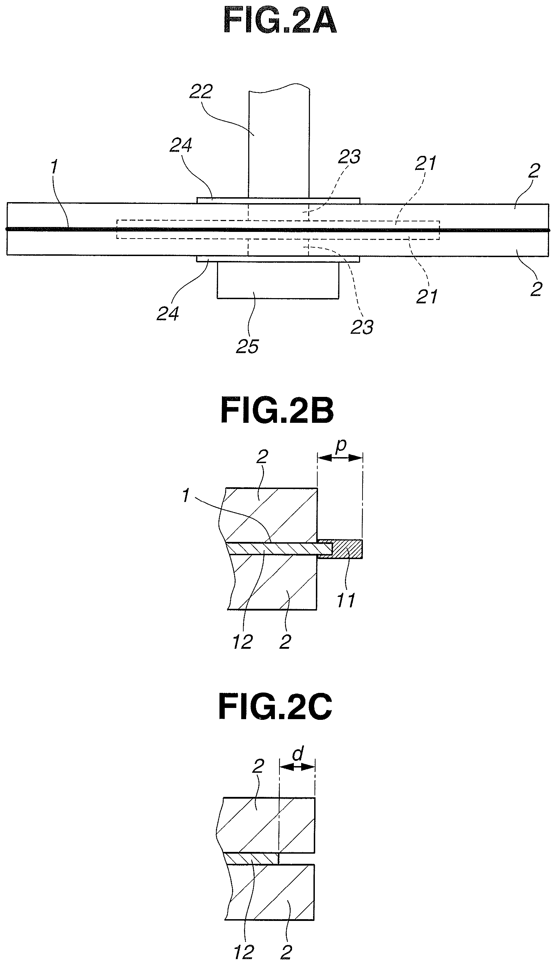

The cutting wheel 1 is placed between the circular jigs 2 and 2 as shown in FIG. 1. A screw portion projecting from the support 22 and a screw portion projecting from the end block 25 are threadably engaged into internally threaded bores (not shown) in power feed pieces 23, 23 for fastening the circular jigs 2, 2 via the washers 24, 24 as shown in FIG. 2A. Then the circular jigs 2, 2 hold the cutting wheel 1 as clamped therebetween.

Since the retainer/electrode plates 21, 21 are in contact with the base of the cutting wheel 1 under an appropriate pressure, electricity may be conducted from the support 22 to the electrode plates 21, 21 via the power feed pieces 23, 23 whereby electric current may flow to the cutting wheel 1. Also, since the circular jigs 2, 2 have a smaller outer diameter than the cutting wheel 1, the opposed surfaces of the cutting wheel are covered over a predetermined region by the jigs and the blade section 11 on the outer periphery of the cutting wheel 1 projects beyond the outer edge of the circular jigs 2, 2 as best shown in FIG. 2B. The (radial) projection "p" of the blade section 11 beyond the jigs 2, 2 should preferably be set equal to or greater than the thickness (or axial distance) of the blade section 11 to ensure that the blade section 11 projects beyond or is outside the outer edge of the circular jigs.

The cutting wheel 1 clamped between the circular jigs 2, 2 is immersed in an electropolishing liquid in an electropolishing tank. An electrode which is spaced radially outwardly from and encloses the outer circumference of the blade section 11, i.e. in axial register therewith, and a pair of electrodes which are opposed to and spaced axially apart from the side surfaces of the blade section, are provided as counter electrodes. With this arrangement, electropolishing is carried out.

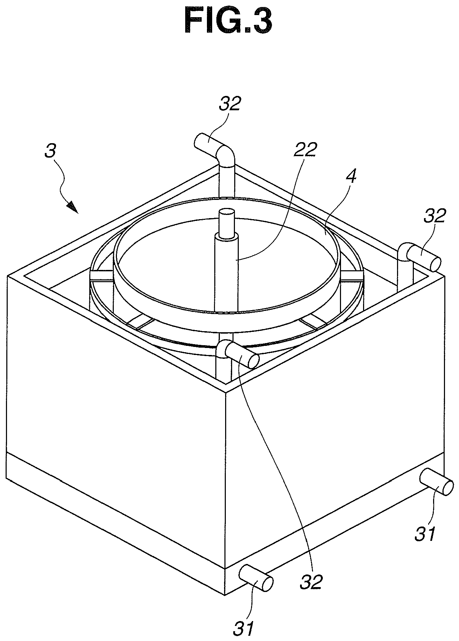

The electropolishing tank used herein may be similar to the electroplating bath used in forming the blade section by electroplating. One exemplary electropolishing tank is a box-shaped tank 3 equipped with an electric heater 31 for heating the bath and piping 32 for circulating the bath as shown in FIG. 3. Alternatively, the electropolishing tank may be an electroless plating bath used in forming the blade section by electroless plating, in which the counter electrodes are disposed.

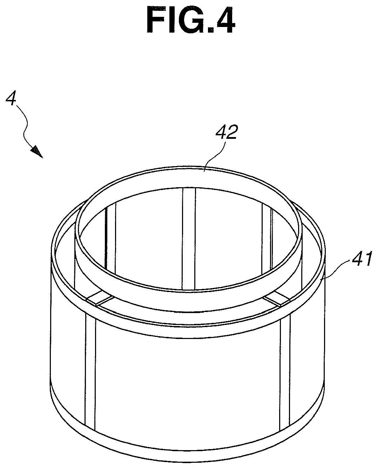

Also the electrode which encloses the outer circumference of the blade section 11 at a certain spacing and serves as one counter electrode may be similar to the anode used in electroplating the blade section. One exemplary electrode is a cylindrical cage electrode 4 consisting of two large and small cylindrical frames 41 and 42 which each consists of a pair of rings and several columns connecting the rings and which are concentrically telescoped and linked by ties, as shown in FIG. 4.

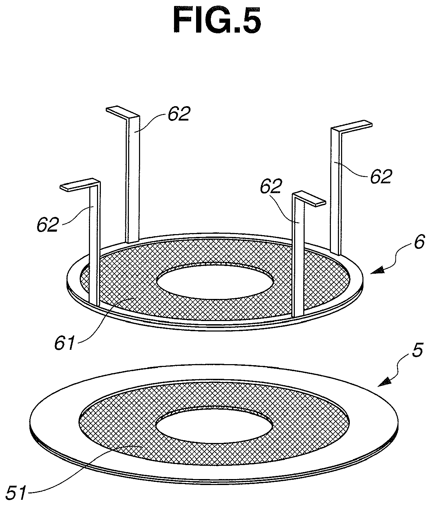

The pair of electrodes which are opposed to the side surfaces of the blade section 11 at a certain spacing and which also serve as counter electrodes may be, for example, annular electrodes 5, 6 as shown in FIG. 5. A lower annular electrode 5 is to be disposed below the cutting wheel 1 (near the bottom of the electropolishing tank 3) and consists of an annular frame and an annular metal mesh 51 disposed inside the annular frame. An upper annular electrode 6 is to be disposed above the cutting wheel 1 and consists of an annular frame and an annular metal mesh 61 disposed inside the annular frame. Four upright suspenders 62 each having a hook at the top are attached to the annular frame of the upper electrode 6. The upper annular electrode 6 is positioned above the cutting wheel 1, with the hooks of suspenders 62 engaged with the upper periphery of the cage electrode 4.

These counter electrodes 4, 5, 6 are composed of frames and meshes which are all formed of electroconductive metal material such as titanium, austenite stainless steel or nickel. Of these, titanium is most preferred for lightweight and corrosion resistance.

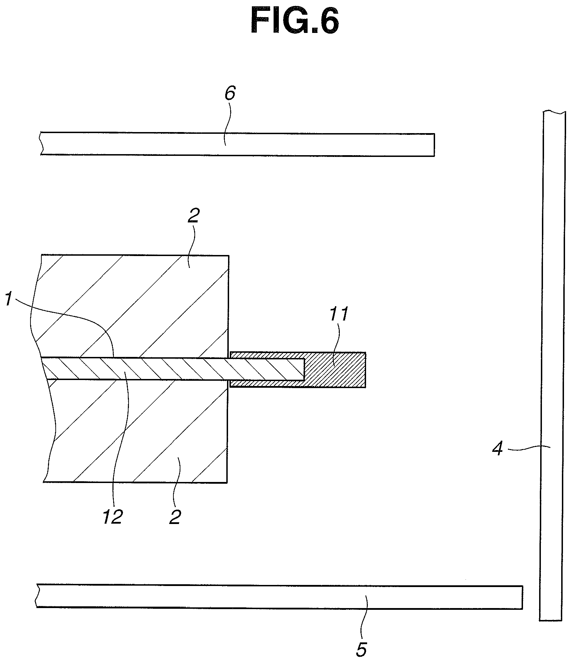

The cutting wheel 1 held by the circular jigs 2, 2 is received in the electropolishing tank 3, and the cage electrode 4 and annular electrodes 5, 6 are mounted in place. These members are positioned in such relationship, as shown in FIG. 6, that the cage electrode 4 encloses the circumference of the blade section 11 on the outer periphery of the base 12 (or cutting wheel 1) at a certain spacing, and the pair of annular electrodes 5, 6 are opposed to the side surfaces of the blade section 11 at a certain spacing. Electric current is conducted from support 22 to cutting wheel 1 via power feed pieces 23 and electrode plates 21. Electricity is also conducted to the cage electrode 4 and annular electrodes 5, 6 as the counter electrode. Then the surface of blade section 11 of cutting wheel 1 is electrolytically polished.

The electropolishing liquid used in electropolishing may be selected from well-known electropolishing liquids, depending on the metal or alloy bond in the blade section 11. Typically an electropolishing liquid which readily dissolves away the metal or alloy bond is used. Also electrolytic conditions may be determined as appropriate in accordance with the type of bond and the degree of dressing. In an example where a single metal such as by nickel plating is used as the bond, an electropolishing liquid having the same composition as the nickel plating bath used for that nickel plating may be used. Specifically, a nickel plating bath containing 240 to 380 g/L of nickel sulfate, 40 to 90 g/L of nickel chloride, and 40 to 60 g/L of boric acid or a nickel sulfamate plating bath containing 450 to 650 g/L of nickel sulfamate, 5 to 15 g/L of nickel chloride, and 30 to 40 g/L of boric acid may be used as the electropolishing liquid. In the former example where the nickel plating bath is used as the electropolishing liquid, electropolishing may be effected at a current density of 1 to 10 A/dm². In the latter example where the nickel sulfamate plating bath is used, electropolishing may be effected at a current density of 3 to

As alluded to above, the outer blade cutting wheel subject to the dressing method of the invention is one comprising a base in the form of an annular thin disc of cemented carbide and a blade section formed on the outer periphery of the base, the blade section being an abrasive layer comprising abrasive grains and a metal or alloy bond for bonding the grains to each other and to the base.

The abrasive grains and the metal or alloy bond used herein are not particularly limited. Examples of the abrasive grains include diamond grains, cubic boron nitride (CBN) grains, alumina grains, alumina based grains, SiC grains, and SiC based grains. Of these, diamond grains and/or CBN grains are preferred. The bonding metal or alloy is preferably a single metal or alloy to be deposited by electroplating or electroless plating though not limited thereto. More particularly, the metal is preferably selected from Ni and Cu. The alloy is preferably selected from Ni-Fe, Ni-Mn, Ni-P, Ni-Co and Ni-Sn alloys.

It is also acceptable that a metal or alloy infiltrates into microscopic voids between abrasive grains or between abrasive grains and the base. The infiltrating metal may be either one or both of Sn and Pb. The infiltrating alloy may be selected from Sn-Ag-Cu, Sn-Ag, Sn-Cu, Sn-Zn, and Sn-Pb alloys, for example, or a mixture thereof.

The dressing step of the invention is, of course, advantageously used in the dressing treatment of dressing a (worn) outer blade cutting wheel with a blunt cutting edge to restore a fresh cutting edge. Since the electroplating bath used in forming the blade section is used as the electropolishing liquid, the dressing step is advantageously used in a process of manufacturing an outer blade cutting wheel by electroplating or electroless plating to deposit a metal or alloy bond around abrasive grains to form a blade section, tailoring the blade section, and dressing the blade section. The invention provides a method for manufacturing an outer blade cutting wheel comprising a base in the form of an annular thin disc of cemented carbide having an outer periphery and a blade section formed on the outer periphery of the base, the method comprising the steps of effecting electroplating on the base having abrasive grains retained on its outer periphery in a plating bath, to deposit a metal or alloy for bonding the abrasive grains to each other and to the base, for thereby forming an abrasive layer composed of the abrasive grains and the metal or alloy, the abrasive layer constituting the blade section; tailoring the protrusion, thickness and outer diameter of the abrasive layer by wire electrical discharge machining and/or a grinding wheel; and dressing the cutting wheel by the dressing method of one embodiment, using the plating bath in the electroplating or electroless plating step as an electropolishing liquid. As used herein the term "protrusion" of the abrasive layer is a height of the abrasive layer as measured from the base surface in an axial direction of the base.

When electroplating is effected to deposit a metal or alloy on the base to form an abrasive layer serving as the blade section, the same jigs as the circular jigs used in the above dressing method may be used in the electroplating. In this case, however, the outer diameter of circular jigs 2, 2 is larger than the base 12, as shown in FIG. 2C, to define a space between outer peripheral portions of the jigs 2, 2, which is filled with abrasive grains. With abrasive grains held in the space, plating is carried out whereby the plating metal or alloy bonds abrasive grains together and to the base. The radial distance "d" of the space for receiving abrasive grains may be determined as appropriate, depending on the size of the blade section 11 to be formed there. The metal or alloy to be deposited by electroplating or electroless plating is as exemplified above.

The means for holding abrasive grains in the space between the outer peripheral portions of circular jigs 2, 2 may be magnetic attraction, for example. Magnetic holding may be achieved by previously coating abrasive grains with a magnetic material, and attaching permanent magnets to circular jigs 2, 2, for thereby holding the abrasive grains in the space by the magnetic attractive force. This is known.

In carrying out electroplating, a plating bath similar to the bath shown in FIG. 3 may be used. In the case of electroplating, the cage electrode 4 is used as the anode rather than the counter electrode, and a pair of annular electrodes 5, 6 are unnecessary. In the case of dressing by electropolishing, this plating bath may be used as the electropolishing bath without a substantial modification except that a pair of annular electrodes 5, 6 are positioned and used as the counter electrode along with the cage electrode 4.

Once the abrasive layer composed of abrasive grains and the metal or alloy bond is formed by electroplating, additional electroplating or electroless plating may be carried out to form a plating cover for enhancing the bond strength between abrasive grains and between abrasive grains and the base. This cover plating may be carried out in the same manner as the previous electroplating or electroless plating. The only difference is that the outer diameter of the circular jigs 2, 2 is smaller than the cutting wheel so that the blade section 11 in the form of the abrasive layer projects beyond the outer edge of the jigs 2, 2 as shown in FIG. 2B. Then cover plating is applied to the abrasive layer.

Alternatively, once the abrasive layer composed of abrasive grains and the metal or alloy bond is formed by electroplating or electroless plating, a molten metal and/or alloy may be infiltrated into voids between abrasive grains and between abrasive grains and the base and solidified there. More particularly, in the outer blade cutting wheel having the blade section formed by bonding abrasive grains to the base via electroplating or electroless plating, since the abrasive grains used have a certain particle size, the abrasive grains are bonded such that contacts between grains and between grains and the base are only local. Voids are left between abrasive grains and between abrasive grains and the base. With electroplating/electroless plating it is impossible to fully fill these voids with the plating metal or alloy. As a result, the blade section still contains voids in communication with its surface even after the plating. If such voids are filled with a metal or alloy, then the bond strength is improved and eventually a higher machining accuracy is available. The infiltrating metal or alloy preferably has a melting point of up to 350°C while examples of the metal or alloy are the same as mentioned above.

The metal or alloy may be infiltrated into the abrasive layer or blade section, for example, by working the metal or alloy into a wire with a diameter of 0.1 to 2.0 mm, preferably 0.8 to 1.5 mm, particles, or a thin-film ring of the same shape and size as the blade section having a thickness of 0.05 to 1.5 mm, resting the wire, particles or ring on the blade section, heating the blade section on a heater such as a hot plate or in an oven to a temperature above the melting point, holding the temperature for letting the molten metal or alloy infiltrate into the blade section, and thereafter slowly cooling to room temperature. Alternatively, infiltration is carried out by placing the outer blade cutting wheel in a lower mold half with a clearance near the blade section, charging the mold half with a weighed amount of metal or alloy, mating an upper mold half with the lower mold half, heating the mated mold while applying a certain pressure across the mold, for letting the molten metal or alloy infiltrate into the blade section. Thereafter the mold is cooled, the pressure is then released, and the wheel is taken out of the mold. The cooling step following heating should be slow so as to avoid any residual strains.

Before the metal or alloy is rested on the abrasive layer or blade section, for example, a commercially available solder flux containing chlorine or fluorine may be applied to the blade section for the purpose of improving the wettability of the blade section or retaining the metal or alloy to the blade section.

After the abrasive layer or blade section is formed on the outer periphery of the base as mentioned above and before the inventive dressing is applied to the blade section, it may be shaped or tailored i.e. its protrusion, thickness and outer diameter adjusted e.g. by wire electrical discharge machining (EDM) or by grinding and polishing with a grinding wheel of aluminum oxide, silicon carbide or diamond. At this point, the blade section at the edge may be chamfered (beveled or rounded) to a degree of at least C0.1 or R0.1, though depending on the thickness of the blade section, because such chamfering is effective for reducing cut marks on the cut surface or mitigating chipping of a magnet piece at the edge. Thereafter, the blade section is subjected to dressing by the inventive method.

### EXAMPLE

Examples are given below by way of illustration and not by way of limitation.

### Example 1

A cemented carbide base in the form of an annular thin disc having an inner diameter of 60 mm and an outer diameter of 133 mm was held by clamping it between a pair of circular jigs as shown in FIGS. 1, 2A and 2B. The circular jigs had an outer diameter which was 2 mm smaller than the outer diameter of the base so that the outer edge of the base projected 1 mm beyond the outer circumference of the jigs. Electroplating was carried out in a nickel electroplating bath #1, defined below, to deposit an undercoat. The base was then held by clamping it between a pair of circular jigs 2, 2 as shown in FIGS. 1, 2A and 2C. The circular jigs 2, 2 had an outer diameter which was 2 mm larger than the outer diameter of the base. Permanent magnet segments were built in the outer peripheral portions of the jigs. The space defined between the outer peripheral portions of the jigs (FIG. 2C) was filled with 0.8 g of diamond abrasive grains pre-coated with a magnetic material (nickel) and having an average particle size of 130 µm. The diamond grains were held within the space by the magnetic force. The assembly was immersed in a nickel electroplating bath #2, defined below, in an electroplating tank 3 as shown in FIG. 3. Electroplating was carried out to deposit nickel to bond abrasive grains together and to the base, thereby bonding abrasive grains to the outer periphery of the base to form an abrasive layer. At this point, the cage electrode 4 served as an anode.

Next the base was held by clamping it between a pair of circular jigs as shown in FIGS. 1, 2A and 2B. The circular jigs had an outer diameter which was 2 mm smaller than the outer diameter of the abrasive layer-baring base so that the abrasive layer on the outer periphery of the base projected beyond the outer circumference of the jigs. Electroplating was carried out in a nickel sulfamate electroplating bath, defined below, in an electroplating tank 3 shown in FIG. 3 to deposit a plating cover for enhancing the bond strength between abrasive grains and between abrasive grains and the base. The abrasive layer thus obtained was ground using two grinding wheels, WA and GC grinding wheels, thereby tailoring the protrusion and thickness of the abrasive layer so that the abrasive layer had a protrusion of 50 µm. The abrasive layer was further ground to an outer diameter of 135 mm by wire EDM, completing the blade section.

Next, the base having the blade section formed was held by clamping it between a pair of circular jigs as shown in FIGS. 1, 2A and 2B. The circular jigs had an outer diameter which was 2 mm smaller than the outer diameter of the blade section-baring base so that the blade section projected beyond the outer circumference of the jigs. The blade section was dressed by electropolishing using the nickel electroplating bath #2 (used in the previous electroplating) as the electropolishing liquid, completing an outer blade cutting wheel. At this point, the plating tank 3 of FIG. 3 used in the previous electroplating was used as the electropolishing tank, and annular electrodes 5, 6 as shown in FIG. 5 were positioned as shown in FIG. 6. With the annular electrodes 5, 6 and cage electrode 4 set as the counter electrode, and the base as the anode, electropolishing was carried out.

### Nickel electroplating bath #1 (undercoat plating)

**Composition**

| | | |
|---|---|---|
| NiCl₂-6H₂O | 55 | g/L |
| NiSO₄- 6H₂O | 370 | g/L |
| Boric acid | 45 | g/L |

**Plating conditions**

| | | |
|---|---|---|
| Bath temperature | 50-55 | ° C |
| Constant current | 0.5 | A/dm² |
| Conduction time | 60 | min |

### Nickel electroplating bath #2

**Composition**

| | | |
|---|---|---|
| NiCl₂-6H₂O | 70 | g/L |
| NiSO₄-6H₂O | 370 | g/L |
| Boric acid | 45 | g/L |

**Plating conditions**

| | | |
|---|---|---|
| Bath temperature | 50-55 | °C |
| Constant current | 0.2 | A/dm² |
| Conduction time | 150 | min |

### Nickel sulfamate plating bath

**Composition**

| | | |
|---|---|---|
| Ni(NH₂SO₃)₂-4H₂O | 600 | g/L |
| NiCl₂-6H₂O | 10 | g/L |
| Boric acid | 35 | g/L |

**Plating conditions**

| | | |
|---|---|---|
| Bath temperature | 60-65 | °C |
| Constant current | 0.5 | A/dm² |
| Conduction time | 60 | min |

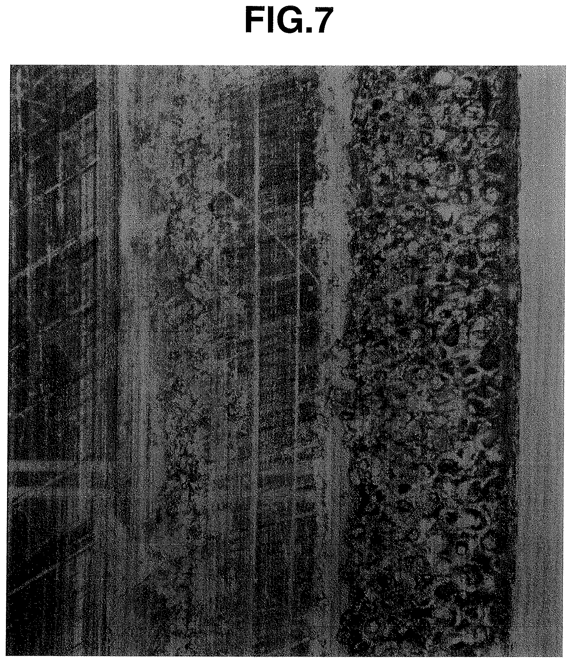

The side surface of the blade section of the resulting outer blade cutting wheel was observed under an optical stereomicroscope, with the micrograph shown in FIG. 7. It is evident that abrasive grains were fully exposed (or raised) and definite chip pockets were defined between abrasive grains.

Using the outer blade cutting wheel, a rare earth permanent magnet block (Nd-Fe-B magnet) was cutoff machined into magnet pieces under the following conditions.

**OD cutting wheel operating conditions**

| | | |
|---|---|---|
| Rotational speed | 6000 | rpm |
| Feed speed | 400 | mm/min |
| Depth of cut | 1 | mm/pass |

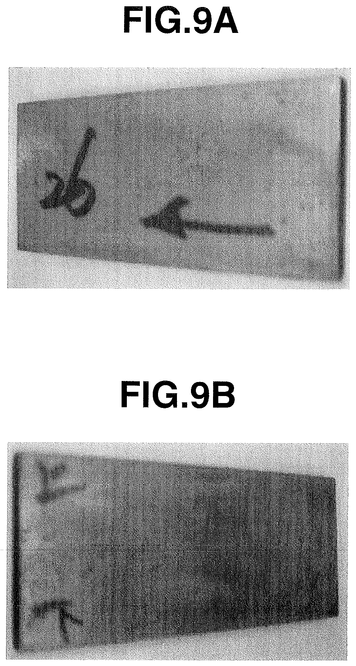

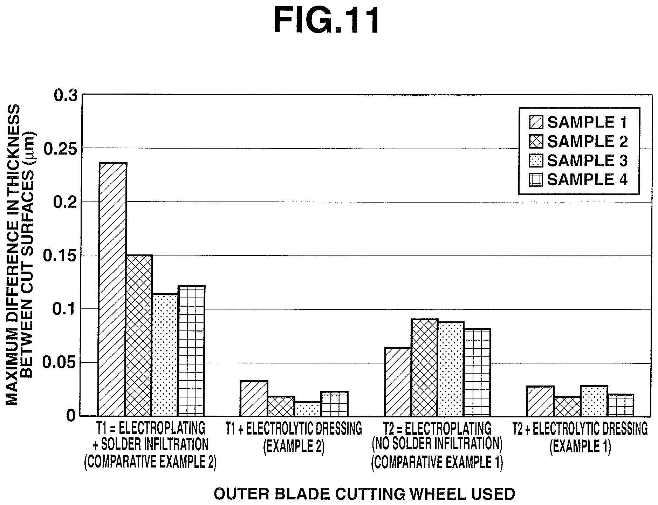

FIG. 9A is a photograph showing the cut surface of a cut magnet piece. It is evident from FIG. 9A that the cut surface was smooth and free of cutting marks. Using the outer blade cutting wheel, four magnet pieces of 2 mm thick were sawed. The maximum difference in thickness between opposite cut surfaces of each piece was measured for evaluating the dimensional accuracy of cutting. The results are plotted in the graph of FIG. 11. As is evident from FIG. 11, the four magnet pieces had a dramatically improved dimensional accuracy as demonstrated by a maximum thickness difference of around 0.025 µm. It is demonstrated that the outer blade cutting wheel is improved in machining accuracy.

### Comparative Example 1

An outer blade cutting wheel was manufactured as in Example 1 except that the electropolishing was omitted, and instead, the dressing was achieved by the grinding with grinding wheels and the machining by wire EDM. The protrusion, thickness and outer diameter of the abrasive layer were tailored (protrusion 50 µm) by grinding with grinding wheels, and the outer diameter was tailored by wire EDM.

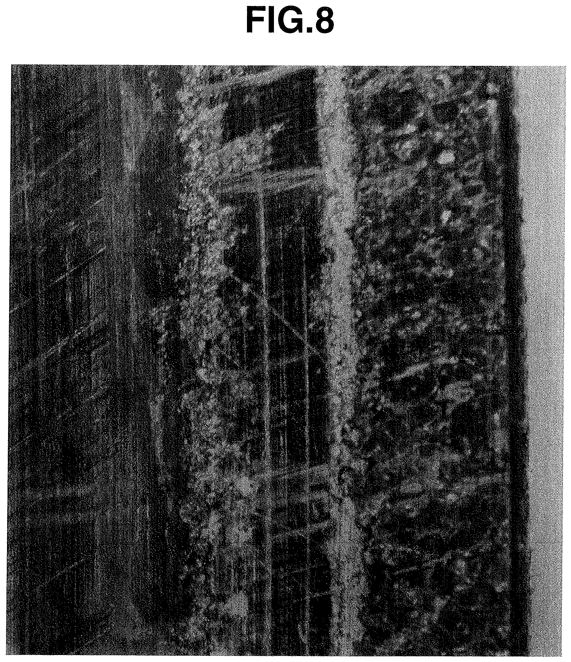

The side surface of the blade section of the outer blade cutting wheel was observed under an optical stereomicroscope, with the micrograph shown in FIG. 8. Few abrasive grains were exposed on the side surface and no definite chip pockets were seen.

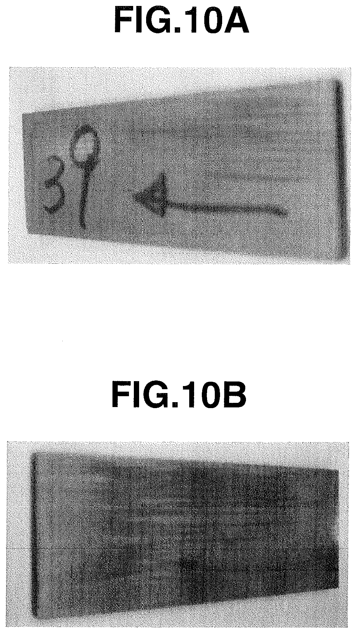

Using the outer blade cutting wheel, a rare earth permanent magnet block (Nd-Fe-B magnet) was cutoff machined into magnet pieces under the same conditions as in Example 1. FIG. 10A is a photograph showing the cut surface of a cut magnet piece. It is evident from FIG. 10A that many cutting marks were seen and the cut surface was unacceptable. Using the outer blade cutting wheel, four magnet pieces were sawed as in Example 1 for evaluating the dimensional accuracy of cutting. The maximum thickness difference is plotted in the graph of FIG. 11. As is evident from FIG. 11, the four magnet pieces were inferior in dimensional accuracy as demonstrated by a maximum thickness difference in far excess of 0.05 µm. Therefore, the outer blade cutting wheel is inferior in machining accuracy to Example 1.

### Example 2

An outer blade cutting wheel was manufactured as in Example 1 except that the cover plating was omitted, and instead, a Sn-Pb alloy was infiltrated into the abrasive layer or blade section. Infiltration of Sn-Pb alloy was carried out by resting the blade section-baring base on a hot plate at 230°C, heating the base for 5 minutes, melting a wire of Sn-Pb alloy having a diameter of 8 mm using a soldering iron at 230°C, applying the molten alloy to the hot blade section on the base, letting the alloy infiltrate, and allowing the blade section to cool down.

Using the outer blade cutting wheel, a rare earth permanent magnet block (Nd-Fe-B magnet) was cutoff machined into magnet pieces under the same conditions as in Example 1. FIG. 9B is a photograph showing the cut surface of a cut magnet piece. It is evident from FIG. 9B that the cut surface was smooth and free of cutting marks. Using the outer blade cutting wheel, four magnet pieces were sawed as in Example 1 for evaluating the dimensional accuracy of cutting. The maximum thickness difference is plotted in the graph of FIG. 11. As is evident from FIG. 11, the four magnet pieces had a dramatically improved dimensional accuracy as demonstrated by a maximum thickness difference of around 0.025 µm. It is demonstrated that the outer blade cutting wheel is improved in machining accuracy.

### Comparative Example 2

An outer blade cutting wheel was manufactured as in Example 2 except that the electropolishing was omitted, and instead, the dressing was achieved by the grinding with grinding wheels and the machining by wire EDM. The protrusion, thickness and outer diameter of the abrasive layer were tailored (protrusion 50 µm) by grinding with grinding wheels, and the outer diameter was tailored by wire EDM.

Using the outer blade cutting wheel, a rare earth permanent magnet block (Nd-Fe-B magnet) was cutoff machined into magnet pieces under the same conditions as in Example 1. FIG. 10B is a photograph showing the cut surface of a cut magnet piece. It is evident from FIG. 10B that many cutting marks were seen and the cut surface was unacceptable. Using the outer blade cutting wheel, four magnet pieces were sawed as in Example 1 for evaluating the dimensional accuracy of cutting. The maximum thickness difference is plotted in the graph of FIG. 11. As is evident from FIG. 11, the four magnet pieces were inferior in dimensional accuracy as demonstrated by a maximum thickness difference in far excess of 0.1 µm, with one piece showing a remarkable thickness variation in excess of 0.2 µm. Therefore, the outer blade cutting wheel is inferior in machining accuracy to Example 2.

## Claims

1. A method of manufacturing an outer blade cutting wheel comprising a base (12) in the form of an annular thin disc of cemented carbide having an outer periphery and a blade section (11) formed on the outer periphery of the base, said method comprising the steps of:
clamping the base (12) between circular jigs (2) of outer diameter larger than the base so that a space is defined between outer peripheral portions of the jigs;
filling abrasive grains, previously coated with a magnetic material, in the space and holding the abrasive grains in the space by the attraction of permanent magnets attached to the jigs;
effecting electroplating on the base (12) having the abrasive grains retained on its outer periphery, in a plating bath using an electrode (4) which is spaced out from and encloses the outer circumference of the blade section, to deposit a metal or alloy to bond the abrasive grains to each other and to the base, thereby forming an abrasive layer composed of the abrasive grains and the metal or alloy, the abrasive layer constituting said blade section (11);
tailoring the protrusion, thickness and outer diameter of the abrasive layer by wire electrical discharge machining and/or by a grinding wheel, and
dressing the cutting wheel, by
clamping the cutting wheel between a further pair of circular jigs (2) to hold the cutting wheel, said further jigs having smaller outer diameter than the cutting wheel such that the jigs (2) cover the opposed surfaces of the cutting wheel over a predetermined range and the blade section (11) projects beyond the outer edge of the jigs,
immersing the cutting wheel clamped between the jigs in an electropolishing liquid in an electropolishing tank, using the plating bath from the electroplating step as electropolishing liquid;
providing, as counter electrodes, said electrode (4) used in the electroplating which is spaced out from and encloses the outer circumference of the blade section (11), and electrodes (5,6) opposed to and spaced apart from the opposite side surfaces of the blade section (11), and
conducting electricity between the cutting wheel (1) and the counter electrodes (4,5,6) to electrolytically dissolve away part of the metal or alloy between abrasive grains until abrasive grains are exposed partially raised from the blade section surface.

2. A method of claim 1 wherein the counter electrodes include a cage electrode (4) as said electrode spaced apart from and enclosing the outer circumference of the blade section (11), and a pair of annular electrodes (5,6) as said electrodes which are opposed to and spaced apart from the side surfaces of the blade section (11).

3. A method of claim 1 or 2 wherein said electrolytic dissolving removes chips from chip pockets in the surface of the blade section (11).

4. A method of claim 1, 2 or 3 wherein the abrasive grains are diamond and/or CBN grains.

5. A method of any one of claims 1 to 4 wherein the metal or alloy, for bonding the grains to each other and to the base, is bonding metal selected from Ni and Cu or bonding alloy selected from Ni-Fe, Ni-Mn, Ni-P, Ni-Co and Ni-Sn alloys.

6. A method of any one of claims 1 to 5 comprising, after the step of electroplating to form the abrasive layer composed of abrasive grains and the metal or alloy, a step of effecting further electroplating or electroless plating to form a plating cover enhancing the bond strength between abrasive grains and between abrasive grains and the base.

7. A method of any one of any one of claims 1 to 5 comprising, after the step of electroplating to form the abrasive layer composed of abrasive grains and the metal or alloy, a step of infiltrating a molten metal and/or alloy into voids between abrasive grains or between abrasive grains and the base and solidifying the metal and/or alloy therein.

8. A method of claim 7 wherein the infiltrating is with infiltrating metal which is Sn and/or Pb or with infiltrating alloy selected from Sn-Ag-Cu, Sn-Ag, Sn-Cu, Sn-Zn and Sn-Pb alloys and mixtures thereof.

## Patentansprüche

1. Verfahren zur Herstellung eines Außenklingenschneidrades, das eine Basis (12) in der Form einer ringförmigen dünnen Scheibe aus Hartmetall umfasst, die einen Außenumfang und einen auf dem Außenumfang der Basis ausgebildeten Klingenabschnitt (11) aufweist, wobei das Verfahren die folgenden Schritte umfasst:
Festklemmen der Basis (12) zwischen kreisförmigen Einspannvorrichtungen (2) mit einem Außendurchmesser, der größer als die Basis ist, sodass ein Raum zwischen Außenumfangsabschnitten der Einspannvorrichtungen definiert wird;
Füllen von Schleifkörnern, die vorzugsweise mit einem magnetischen Material beschichtet sind, in den Raum und Halten der Schleifkörner in dem Raum durch die Anziehung von den an den Einspannvorrichtungen angebrachten Permanentmagneten;
Ausführen von Galvanisierung auf der Basis (12), welche die Schleifkörner in einem Plattierungsbad unter Verwendung einer Elektrode (4), welche vom Außenumfang des Klingenabschnitts beabstandet angeordnet ist und diesen umschließt, auf ihrem Außenumfang festhält, um ein Metall oder eine Legierung zum haftschlüssigen Verbinden der Schleifkörner miteinander und mit der Basis abzuscheiden, wobei eine aus den Schleifkörnern und dem Metall oder der Legierung zusammengesetzte Schleifschicht gebildet wird, worin die Schleifschicht den Klingenabschnitt (11) darstellt;
Zuschneiden des Vorsprungs, der Dicke und des Außendurchmessers der Schleifschicht durch Drahtschneidefunkenerosionsbearbeitung und/oder durch ein Schleifrad, und
Abrichten des Schneidrads durch
Festklemmen des Schneidrads zwischen einem weiteren Paar von kreisförmigen Einspannvorrichtungen (2) zum Halten des Schneidrads, wobei die weiteren Einspannvorrichtungen einen derart kleineren Außendurchmesser als das Schneidrad aufweisen, dass die Einspannvorrichtungen (2) die einander gegenüberliegenden Oberflächen des Schneidrads über einen vorbestimmten Bereich abdecken und der Klingenabschnitt (11) über die Außenkante der Einspannvorrichtungen vorsteht,
Eintauchen des zwischen den Einspannvorrichtungen festgeklemmten Schneidrads in eine Elektropolierflüssigkeit in einem Elektropoliertank unter Anwendung des Plattierungsbades aus dem Elektroplattierungsschritt als Elektropolierflüssigkeit;
Bereitstellen als Gegenelektroden der beim Galvanisieren eingesetzten Elektrode (4), die vom Außenumfang des Klingenabschnitts (11) beabstandet angeordnet ist und diesen umschließt, und von Elektroden (5, 6), die einander gegenüberliegend und von den gegenüberliegenden Seitenflächen des Klingenabschnitts (11) beabstandet angeordnet sind, und
Leiten von Elektrizität zwischen das Schneidrad (1) und die Gegenelektroden (4, 5, 6), um einen Teil des Metalls oder der Legierung zwischen Schleifkörnern solange elektrolytisch aufzulösen, bis Schleifkörner von der Klingenabschnittoberfläche zum Teil erhöht freigelegt sind.

2. Verfahren nach Anspruch 1, worin die Gegenelektroden eine Käfigelektrode (4) als die vom Außenumfang des Klingenabschnitts (11) beabstandet angeordnete und diesen umschließende Elektrode, und ein Paar von ringförmigen Elektroden (5, 6) als die Elektroden, die den Seitenflächen des Klingenabschnitts (11) gegenüberliegend und von diesen beabstandet angeordnet sind, umfassen.

3. Verfahren nach Anspruch 1, worin das elektrolytische Auflösen Späne aus Spantaschen in der Oberfläche des Klingenabschnitts (11) entfernt.

4. Verfahren nach Anspruch 1, 2 oder 3, worin die Schleifkörner Diamanten und/oder CBN-Körner sind.

5. Verfahren nach einem der Ansprüche 1 bis 4, worin das Metall oder die Legierung zum haftschlüssigen Verbinden der Körner miteinander und mit der Basis ein aus Ni und Cu ausgewähltes Bondingmetall oder eine aus Ni-Fe, Ni-Mn, Ni-P, Ni-Co und Ni-Sn-Legierung ausgewählte Bondinglegierung ist.

6. Verfahren nach einem der Ansprüche 1 bis 5, umfassend, nach dem Schritt des Galvanisierens zur Ausbildung der aus Schleifkörnern und dem Metall oder der Legierung zusammengesetzten Schleifschicht, einen Schritt des Ausführens einer weiteren Galvanisierung oder eines stromlosen Plattierens zur Ausbildung einer Plattierungsabdeckung, welche die Bindefestigkeit zwischen Schleifkörnern und zwischen Schleifkörnern und der Basis erhöht.

7. Verfahren nach einem der Ansprüche 1 bis 5, umfassend, nach dem Schritt des Galvanisierens zur Ausbildung der aus Schleifkörnern und dem Metall oder der Legierung zusammengesetzten Schleifschicht, einen Schritt des Infiltrierens eines geschmolzenen Metalls und/oder einer Legierung in Leerräume zwischen Schleifkörnern oder zwischen Schleifkörnern und der Basis, und Festwerden-Lassen des Metalls und/oder der Legierung in diesen.

8. Verfahren nach Anspruch 7, worin das Infiltrieren mit Infiltrationsmetall, das Sn und/oder Pb umfasst, oder mit Infiltrationslegierung, die aus Sn-Ag-Cu-, Sn-Ag-, Sn-Cu-, Sn-Zn- und Sn-Pb- Legierungen und Mischungen derselben ausgewählt ist, erfolgt.

## Revendications

1. Procédé de fabrication d'une roue de coupe d'une lame externe comprenant une base (12) sous la forme d'un mince disque annulaire de carbure métallique ayant une périphérie externe et une section de lame (11) formée sur la périphérie externe de la base, ledit procédé comprenant les étapes consistant à :
fixer la base (12) entre des gabarits circulaires (2) ayant un diamètre externe supérieur à la base de sorte qu'un espace soit défini entre les parties périphériques externes des gabarits ;
placer des grains abrasifs, préalablement recouverts d'un matériau magnétique, dans l'espace et maintenir les grains abrasifs dans l'espace par l'attraction d'aimants permanents reliés aux gabarits ;
effectuer un placage électrolytique sur la base (12) ayant les grains abrasifs retenus dans sa périphérie externe, dans un bain de placage à l'aide d'une électrode (4) qui est espacée de et contient la circonférence externe de la section de lame, afin de déposer un métal ou un alliage de façon à relier les grains abrasifs les uns aux autres et à la base, de façon à former une couche abrasive composée des grains abrasifs et du métal ou de l'alliage, la couche abrasive constituant ladite section de lame (11) ;
adapter la saillie, l'épaisseur et le diamètre externe de la couche abrasive par usinage par décharge électrique à fil et/ou par une meule, et
préparer la roue de coupe, en
fixant la roue de coupe entre une autre paire de gabarits circulaires (2) afin de maintenir la roue de coupe, lesdits autres gabarits ayant un diamètre externe inférieur à la roue de coupe de sorte que les gabarits (2) couvrent les surfaces opposées de la roue de coupe sur une distance prédéterminée et que la section de lame (11) se projette au-delà du bord externe des gabarits,
immerger la roue de coupe fixée entre les gabarits dans un liquide de polissage électrolytique dans une cuve de polissage électrolytique, en utilisant le bain de placage de l'étape de placage électrolytique comme liquide de polissage électrolytique ;
prévoir, en guise de contre-électrodes, ladite électrode (4) utilisée pour le placage électrolytique, qui est espacée de et qui contient la circonférence externe de la section de lame (11), et des électrodes (5, 6) opposées à et espacées des surfaces latérales opposées de la section de lame (11), et
faire circuler de l'électricité entre la roue de coupe (1) et les contre-électrodes (4, 5, 6) afin de dissoudre de manière électrolytique une partie du métal ou de l'alliage entre les grains abrasifs jusqu'à ce que les grains abrasifs soient exposés en étant partiellement surélevés par rapport à la surface de la section de lame.

2. Procédé selon la revendication 1, dans lequel les contre-électrodes comprennent une électrode de cage (4) en guise de dite électrode espacée de et contenant la circonférence externe de la section de lame (11), et une paire d'électrodes annulaires (5, 6) en guise de dite électrodes qui sont opposées à et espacées des surfaces latérales de la section de lame (11).

3. Procédé selon la revendication 1 ou 2, dans lequel ladite dissolution électrolytique élimine les copeaux des poches à copeaux sur la surface d ela section de lame (11).

4. Procédé selon la revendication 1, 2 ou 3, dans lequel les grains abrasifs sont des grains de diamant et/ou de CBN.

5. Procédé selon l'une quelconque des revendications 1 à 4, dans lequel le métal ou l'alliage destiné à relier les grains les uns aux autres et à la base est un métal de liaison choisi parmi du Ni et du Cu ou un alliage de liaison choisi parmi des alliages de Ni-Fe, de Ni-Mn, de Ni-P, de Ni-Co et de Ni-Sn.

6. Procédé selon l'une quelconque des revendications 1 à 5, comprenant, après l'étape de placage électrolytique afin de former la couche abrasive composée de grains abrasifs et du métal ou de l'alliage, une étape qui consiste à effectuer un autre placage électrolytique ou un placage non électrolytique afin de former une couche de placage qui améliore la résistance de liaison entre les grains abrasifs et entre les grains abrasifs et la base.

7. Procédé selon l'une quelconque des revendications 1 à 5, comprenant, après l'étape de placage électrolytique afin de former la couche abrasive composée de grains abrasifs et du métal ou de l'alliage, une étape d'infiltration d'un métal et/ou d'un alliage fondu dans les vides situés entre les grains abrasifs ou entre les grains abrasifs et la base, et de solidification du métal et/ou de l'alliage à l'intérieur.

8. Procédé selon la revendication 7, dans lequel l'infiltration s'effectue avec un métal d'infiltration qui est du Sn et/ou du Pb ou avec un alliage d'infiltration choisi parmi des alliages de Sn-Ag-Cu, de Sn-Ag, de Sn-Cu, de Sn-Zn et de Sn-Pb et des mélanges de ceux-ci.
